Europäisches Patentamt

European Patent Office

Office européen des brevets

(11) Numéro de publication: **0 138 035 B1**

(12) **FASCICULE DE BREVET EUROPEEN**

(45) Date de publication du fascicule du brevet:
**08.11.89**

(21) Numéro de dépôt: **84110597.6**

(22) Date de dépôt: **06.09.84**

(51) Int. Cl.⁴: **G 02 B 6/44**

(54) **Dispositif de raccordement entre un câble immergé à fibres optiques et un répéteur.**

(30) Priorité: **16.09.83 FR 8314764**

(43) Date de publication de la demande:
**24.04.85 Bulletin 85/17**

(45) Mention de la délivrance du brevet:
**08.11.89 Bulletin 89/45**

(84) Etats contractants désignés:
**DE FR GB IT**

(56) Documents cités:
**EP-A- 0 066 829**
**EP-A- 0 129 184**
**GB-A- 2 025 650**
**GB-A- 2 074 544**

**PATENT ABSTRACTS OF JAPAN, vol. 6, no. 82 (P-116)[960], 20 mai 1982; & JP-A-57 19 706 (FUJITSU K.K.) 02-02-1982**
**PATENT ABSTRACTS OF JAPAN, vol. 6, no. 183 (P-143)[1061], 18 septembre 1982; & JP-A-57 96 307 (NIPPON DENSHIN DENWA KOSHA) 15-06-1982**

(73) Titulaire: **LES CABLES DE LYON Société anonyme dite:, 170 quai de Clichy, F-92111 Clichy Cedex (FR)**

(72) Inventeur: **Mignien, Georges, 1, Résidence Les Capucines Leulinghen Bernes, F-62250 Marquise (FR)**
Inventeur: **Fasquel, Didier, 5, rue Mallet Stevens-App.9, F-62100 Calais (FR)**

(74) Mandataire: **Weinmiller, Jürgen et al, Lennéstrasse 9 Postfach 24, D-8133 Feldafing (DE)**

ACTORUM AG

## Description

La présente invention concerne un dispositif de raccordement entre un câble immergé à fibres optiques et un répéteur comportant un câble d'accès ayant des fibres optiques à raccorder avec celles du câble immergé, ledit câble immergé étant constitué d'un cœur optique contenant les fibres optiques, d'une voûte en fils d'acier, d'un tube de cuivre rétreint sur la voûte et d'une gaine isolante, l'extrémité de ce dit câble immergé étant fixée dans l'intérieur d'une pièce de raccordement par l'intermédiaire d'une bague conique et d'un remplissage en résine durcissable.

On connaît par le document EP-A-0 066 829, un tel dispositif de raccordement, mais celui-ci comporte, comme magasin de stockage des fibres, un mandrin sur lequel viennent s'enrouler ces fibres.

Dans la demande de brevet EP-A-0 089 057, publiée après la date de priorité de la présente demande, le magasin de stockage est une boîte à mou permettant de refouler la fibre excédentaire après soudure. Cette boîte à mou comporte une rondelle munie d'un épaulement pour recevoir les spires des fibres optiques, mais cet épaulement est insuffisant pour empêcher les risques de casse par courbure trop importante.

Le dispositif selon la présente invention a pour but de supprimer ces risques de casse.

La demande de brevet EP-A-0 129 184, publiée après la date de priorité de la présente demande, concerne un dispositif de raccordement de fibres optiques, mais ce dispositif est une jonction multiple assurant un raccordement entre une tête simple et une tête double.

Le dispositif selon l'invention a pour objet un dispositif de raccordement entre un câble immergé à fibres optiques et un répéteur comportant un câble d'accès ayant des fibres optiques à raccorder avec celles du câble immergé, ledit câble immergé étant constitué d'un cœur optique contenant les fibres optiques, d'une voûte en fils d'acier, d'un tube de cuivre rétreint sur la voûte et d'une gaine isolante, l'extrémité de ce dit câble immergé étant fixée dans l'intérieur d'une pièce de raccordement par l'intermédiaire d'une bague conique et d'un remplissage en résine durcissable, caractérisé en ce que ladite pièce de raccordement forme une partie d'une boîte à mou pour emmagasiner un excès de longueur de fibres optiques, la surface intérieure de la boîte à mou étant délimitée côté câble immergé par un réservoir présentant une surface intérieure annulaire convexe et bombée dont le rayon de courbure est en tous points supérieur ou égal au rayon minimum admis pour la courbure des fibres optiques, et côté câble d'accès par un bouchon présentant une surface intérieure conique, le réservoir et le bouchon définissant un espace pour emmagasiner un excès de longueur de fibres optiques.

Avantageusement, la surface annulaire bombée se raccorde à son pourtour extérieur, face au bouchon, par une surface annulaire de raccordement de courbure inverse au pourtour cylindrique de la partie bombée, et la surface conique se raccorde à son pourtour extérieur, face au réservoir, par une surface annulaire de raccordement, les surfaces annulaires de raccordement étant sensiblement tangentes à la direction des fibres à leur entrée dans ladite boîte à mou.

De préférence, un logement pour un produit absorbant l'humidité est formé dans le réservoir et communique avec l'intérieur de la boîte à mou par de fins canaux, ceci permet de préserver les fibres optiques des effets de l'humidité.

Ci-après, il est présenté, à titre d'exemple et en référence aux dessins ci-joints un dispositif de raccordement selon l'invention.

La figure 1 représente un dispositif de raccordement entre un câble immergé avec armure et un répéteur.

La figure 2 représente plus en détail le dispositif de raccordement.

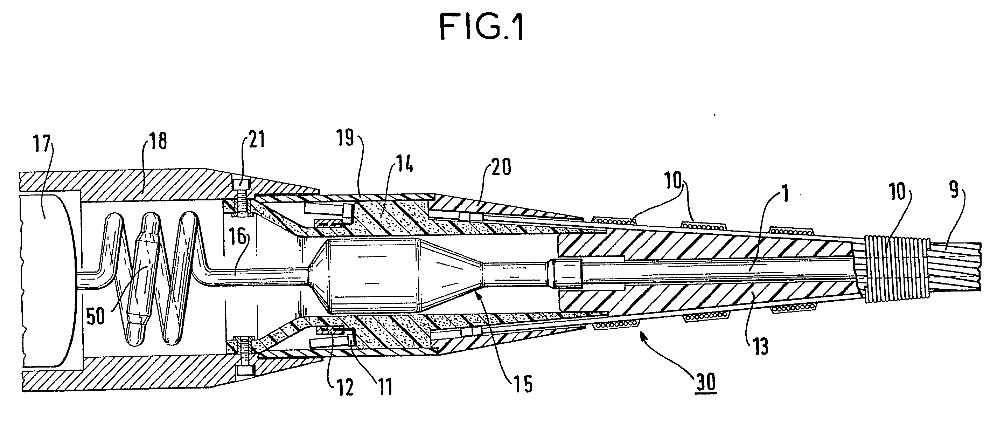

Dans la figure 1, un câble immergé 1 est protégé à l'extérieur d'une tête de câble 30 par une armure 9. Cette armure est maintenue en place sur un manchon de bourrage 13 par des frettes 10, et elle est fixée à une pièce d'ancrage 14 par des fourreaux 11 sertis. Dea anodes de zinc 12 évitent l'oxydation des fourreaux. Une boîte à mou 15 est libre en translation dans la pièce d'ancrage 14. Un tube gainé 16 sortant de la boîte à mou, constitue le câble d'accès à un répéteur 17. Le câble d'accès présente trois spires prévoyant un débattement axial. Une spire présente un renflement 50 protégeant un joint bateau, connu en soi, qui permet de souder les deux extrémités de fibres et de les réintroduire dans le tube 16. Un cylindre de maintien 19 assure une meilleure rigidité de la pièce d'ancrage sur le boîtier 18 du répéteur 17. La pièce d'ancrage 14 est fixé sur le boîtier 18 par des boulons 21.

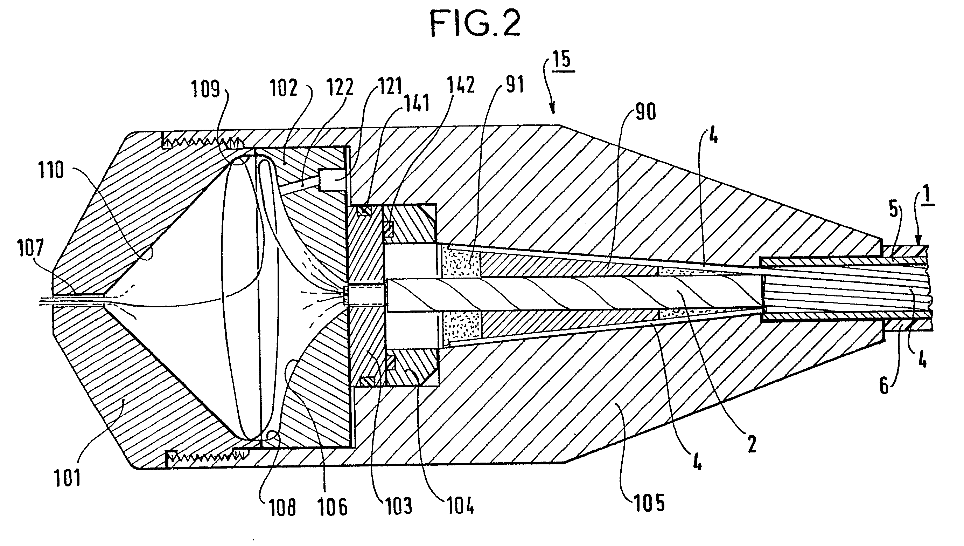

La figure 2 représente en détail la boîte à mou 15, constituée d'une pièce de raccordement 105 et d'un bouchon 101. Un câble immergé 1 est constitué d'un cœur optique 2 contenant les fibres optiques 3, d'une voûte 4 en fils d'acier, d'un tube de cuivre 5 rétreint sur la voûte, et d'une gaine isolante 6. Ce câble peut également comporter un conducteur de retour enveloppé par une autre gaine isolante. Le câble 1 est fixé dans la pièce de raccordement 105 au moyen d'une bague conique 90 qui vient épanouir la voûte 4 de fils d'acier dans un alésage conique interne de la pièce de raccordement. Un remplissage de fermeture 21 en résine durcissable solidifie la liaison.

La boîte à mou est munie à l'intérieur d'un réservoir de fibres 102, d'un passage étanche 103 et d'une bague 104. Le passage étanche 103 et la bague 104 sont serrés par le bouchon 101 agissant à travers le réservoir 102. Des garnitures d'étanchéité telles que des joints toriques 141 et 142 garantissent l'étanchéité. La bague 104 permet une meilleure adhérence du remplissage en polyisobutylène et la position du joint 142 en dehors du passage étanche 103.

Le réservoir 102 présente une surface interne 106 de forme arrondie et bombée. Le rayon de courbure de cette surface est en tous points supérieur au rayon minimum admis pour les fibres. Il n'y a pas d'arête. En particulier, au centre, la surface 106 est raccordée aux fibres émergeant du passage étanche, de façon tangentielle. Ainsi, quand les fibres sont refoulées par l'orifice 107, au centre du bouchon d'extrémité 101, elles sont appliquées contre la surface 106 et ne peuvent en aucun cas prendre un rayon de courbure inférieur à celui de ladite surface 106.

Au voisinage de son pourtour, la surface 106 se raccorde à son pourtour extérieur par une surface annulaire de raccordement 108 de courbure inverse.

Le bouchon 101 présente une surface conique interne 110 qui se raccorde à son pourtour extérieur par une surface de raccordement 109.

Le bouchon 101 et le réservoir 102 sont appliqués l'une sur l'autre et chaque surface de raccordement 108, 109 de l'un et de l'autre constitue une gouttière circulaire sensiblement tangente à la direction des fibres à leur entrée dans la boîte à mou.

Le réservoir de fibres 102 contient un logement 121, relié à l'intérieur de la boîte à mou par de fins canaux 122. Ce logement permet d'y placer un produit absorbant l'humidité (dessicatif), pour maintenir sèche l'atmosphère de la boîte à mou, favorable à une bonne conservation des fibres. En variante, ce logement pourrait être formé dans le bouchon 101.

Une opération de raccordement se passe de la manière suivante:

Après avoir relié par soudure chaque fibre du câble immergé à une fibre du câble d'accès, on réintroduit chaque fibre raccordée dans le tube 16 afin de résorber l'excès de longueur et ceci a pour effet de refouler les fibres à travers l'orifice 107. Les fibres s'appliquent contre la surface 106 jusque vers le pourtour où elles viennent se loger dans la gouttière circulaire formée au voisinage des surfaces 108, 109. A partir de cet instant, les fibres s'inscrivent dans cette gorge et s'y enroulent, ou s'y lovent tant que l'on en fait rentrer dans la boîte à mou.

Sans sortir du cadre de l'invention, le dispositif de raccordement peut être utilisé dans d'autres exemples d'application dans lesquels, par exemple, le câble immergé ne comporte pas d'armure.

## Revendications

1. Dispositif de raccordement entre un câble immergé (1) à fibres optiques et un répéteur (17) comportant un câble (16) d'accès ayant des fibres optiques à raccorder avec celles du câble immergé, ledit câble immergé (1) étant constitué d'un cœur optique (2) contenant les fibres optiques (3), d'une voûte (4) en fils d'acier, d'un tube de cuivre (5) rétreint sur la voûte et d'une gaine isolante (6), l'extrémité de ce dit câble immergé étant fixée dans l'intérieur d'une pièce de raccordement (105) par l'intermédiaire d'une bague conique (90) et d'un remplissage en résine durcissable (91), caractérisé en ce que ladite pièce de raccordement forme une partie d'une boîte à mou (15) pour emmagasiner un excès de longueur de fibres optiques, la surface intérieure de la boîte à mou (15) étant délimitée côté câble immergé par un réservoir (102) présentant une surface intérieure annulaire convexe et bombée (106) dont le rayon de courbure est en tous points supérieur ou égal au rayon minimum admis pour la courbure des fibres optiques, et côté câble d'accès par un bouchon (101) présentant une surface intérieure conique (110), le réservoir et le bouchon définissant un espace pour emmagasiner un excès de longueur de fibres optiques.

2. Dispositif selon la revendication 1, caractérisé en ce que la surface annulaire bombée (106) se raccorde à son pourtour extérieur, face au bouchon, par une surface annulaire de raccordement (108) de courbure inverse au pourtour cylindrique de la partie bombée.

3. Dispositif selon la revendication 1, caractérisé en ce que la surface conique (110) se raccorde à son pourtour extérieur, face au réservoir, par une surface annulaire de raccordement (109).

4. Dispositif selon les revendications 1 à 3, caractérisé en ce que les surfaces annulaires de raccordement (108, 109) sont sensiblement tangentes à la direction des fibres à leur entrée dans ladite boîte à mou.

5. Dispositif selon l'une des revendications 1 à 4, caractérisé en ce qu'un logement (121) pour un produit absorbant l'humidité est formé dans le réservoir (102), et communique avec l'intérieur de la boîte à mou par de fins canaux (122).

## Claims

1. A device for joining an underwater optical fibre cable (1) and a repeater (17), comprising an access cable (16) whose optical fibres are to be connected with those of the underwater cable, the underwater cable (1) consisting of an optical core (2) containing optical fibres (3), of an armouring of steel wires (4), of a copper tube (5) swaged onto the armouring, and of an insulating sheath (6), the end of said cable being fixed inside a joining component (105) by means of a conical ring (90) and a hard-setting resin fill (91), characterized in that said joining component is designed to form part of a slack chamber (15) for storing an excess length of the optical fibres, the inner surface of the slack chamber (15) being delimited, towards the underwater cable by a reservoir (102) having an inner annular, convex and bulged surface (106), whose radius of curvature is greater at any surface point than or equal to the minimum acceptable radius of curvature for the optical fibres, and, towards the access cable, by a plug (101) having an inner conical surface (110), the reservoir and the plug defining a space for storing an excess length of optical fibres.

2. A device according to claim 1, characterized in that the annular bulged surface (106) joins its outer periphery close to the plug via an annular connection surface (108) having a curvature which is inverse to the cylindrical periphery of the bulged portion.

3. A device according to claim 1, characterized in that the conical surface (110) joins its outer periphery close to the reservoir via an annular connection surface (109).

4. A device according to claims 1 to 3, characterized in that the annular connection surfaces (108, 109) are substantially tangent to the direction of the fibres where they enter said slack chamber.

5. A device according to any one of claims 1 to 4, characterized in that there is a compartment (121) formed in the reservoir (102) for accommodating a moisture-absorbing product, which compartment communicates with the interior of the slack chamber via fine channels (122).

## Patentansprüche

1. Vorrichtung zum Verbinden eines Lichtleitfaser-Seekabels (1) und eines Regenerators (17), der ein Zugangskabel (16) besitzt, dessen Lichtleitfasern an die Fasern des Seekabels angeschlossen werden sollen, wobei das Seekabel (1) aus einer optischen Seele (2) mit Lichtleitfasern (3), einer Bewehrung (4) aus Stahldrähten, einem auf die Bewehrung aufgezogenen Kupferrohr (5) und einer Isolierhülle (6) besteht und das Ende des Seekabels im Inneren eines Anschlußkörpers (105) mit Hilfe eines konischen Rings (90) und einer Füllung (91) aus härtbarem Harz befestigt ist, dadurch gekennzeichnet, daß der Befestigungskörper (105) einen Teil eines Losegehäuses (15) zur Aufnahme einer Überlänge der Lichtleitfasern bildet, wobei die Innenfläche des Losegehäuses (15) zur Seite des Seekabels hin durch einen Vorratsraum (102) mit einer ringförmigen konvexen und gewölbten Innenfläche (106), deren Krümmungsradius an allen Punkten größer oder gleich dem kleinstzulässigen Krümmungsradius der Lichtleitfasern ist, und zur Zugangsseite des Kabels hin durch einen Stopfen (101) begrenzt ist, der eine konische Innenfläche (110) besitzt, wobei der Vorratsraum und der Stopfen einen Raum zur Aufnahme einer Überschußlänge der Lichtleitfasern definieren.

2. Vorrichtung nach Anspruch 1, dadurch gekennzeichnet, daß die ringförmige, gewölbte, zum Stopfen hin gerichtete Fläche (106) an ihren äußeren Umfang gegenüber dem Stopfen in eine ringförmige Übergangsfläche (108) übergeht, die eine gegenüber dem zylindrischen Umfang des gewölbten Abschnitts umgekehrte Krümmung besitzt.

3. Vorrichtung nach Anspruch 1, dadurch gekennzeichnet, daß die konische, zum Vorratsraum hin gerichtete Fläche (110) an ihren äußeren Umfang gegenüber dem Vorratsraum in eine ringförmige Übergangsfläche (109) übergeht.

4. Vorrichtung nach den Ansprüchen 1 bis 3, dadurch gekennzeichnet, daß die ringförmigen Übergangsflächen (108, 109) im wesentlichen tangential zur Richtung der Fasern bei ihrem Eintritt in das Losegehäuse verlaufen.

5. Vorrichtung nach einem der Ansprüche 1 bis 4, dadurch gekennzeichnet, daß im Vorratsraum (102) ein Raum (121) für ein feuchtigkeitsabsorbierendes Produkt ausgebildet ist, der über feine Kanäle (122) mit dem Inneren des Losegehäuses verbunden ist.

# FIG.1

EP 0 138 035 B1

# FIG.2

EP 0 138 035 B1